# EUROPÄISCHE PATENTSCHRIFT

(11) **EP 1 965 099 B1**
(45) Veröffentlichungstag und Bekanntmachung des Hinweises auf die Patenterteilung: **04.04.2012**
(21) Anmeldenummer: 08001484.8
(22) Anmeldetag: 26.01.2008
(51) Int. Cl.: F16H 59/04, G05G 5/03, F16H 61/18, F16H 61/24

(54) **Schalteinrichtung mit Federelement zur Wählkrafterzeugung für ein mehrgängiges Zahnräderwechselgetriebe**
Selector device with spring-biasing arrangement for providing selection feel in a multi-ratio gearbox
Dispositif de changement de vitesses avec élément ressort de rappel d'organes de sélection pour transmission multivitesses

(30) Priorität: 01.03.2007 DE 102007009988
(43) Veröffentlichungstag der Anmeldung: 03.09.2008
(73) Patentinhaber: Dr. Ing. h.c. F. Porsche AG, 70435 Stuttgart (DE)
(72) Erfinder: Grünberger, Joachim, 74343 Sachsenheim (DE); Schrage, Henrik, 74189 Weinsberg (DE)

(56) Entgegenhaltungen:
- EP-A1- 0 541 098
- EP-A1- 0 849 506
- EP-A2- 0 052 493
- DE-A1- 10 204 230
- DE-A1- 19 908 147
- JP-A- 57 140 229

## Beschreibung

Die Erfindung betrifft eine Schalteinrichtung mit Federelement zur Wählkrafterzeugung für ein mehrgängiges Zahnräderwechselgetriebe eines Kraftfahrzeuges, mit einem in einem Gehäuse gelagerten, schwenkbaren und axial verschiebbaren Wahl- und Schaltaktuator, wobei durch Schwenken des Aktuators über eine Wählgasse Schaltgassen der Schalteinrichtung anwählbar sind, und durch anschließendes axiales Verschieben des Aktuators Gangstufen der Schalteinrichtung schaltbar sind, wobei die Wählkraft bei Schwenkbewegungen des Aktuators durch eine mittels des Federelements gegen eine Rampe vorgespannte Ablaufrolle aufgrund der Kontur der Rampe in Laufrichtung der Ablaufrolle steuerbar ist.

Eine derartige, gattungbildende Schalteinrichtung ist aus der EP 0 849 506 A1 bekannt. Bei dieser setzt sich die Rampe aus einzelnen Wählschwingen zusammen, wobei jede Wählschwinge einen Teil der Kontur der Rampe abbildet, somit mehrere Konturelemente vorgesehen sind. In Abhängigkeit von der Stellung eines Schalthebels und damit einer von diesem beaufschlagten Schaltwelle kontaktiert die unter der Wirkung des Federelement stehende Ablaufrolle eine der Wählschwingen. Beim Schwenken der Schaltwelle werden unterschiedliche und definierte Widerstände an der Schaltwelle gegen das Schwenken erzeugt. Die dabei entstehenden Wählkräfte sind schematisch in einem Schaltschema beschrieben. Es ist das Schaltschema für ein Sechsganggetriebe dargestellt. Drei nebeneinander liegende Schaltgassen sind für das Schalten der sechs Vorwärtsgänge vorgesehen. In einer vierten Schaltgasse wird der Rückwärtsgang geschaltet. Wählkräfte werden bei dieser Schalteinrichtung bei einer Bewegung aus der Neutralstellung (Schaltgasse dritter und vierter Gang) nach rechts in die Schaltgasse des fünften und sechsten Ganges sowie aus der Neutralstellung heraus nach links in die Schaltgasse des ersten und zweiten Ganges hinein und darüber hinaus beim Einwählen in die Gasse des Rückwärtsgangs erzeugt. Beim Einwählen in die Gasse des Rückwärtsgangs steigt die Wählkraft sprungartig an und signalisiert dem Bediener das Wählen des Rückwärtsgangs.

Der Bediener wird mittels der am Schalthebel deutlich ansteigenden Schaltkraft beim Anwählen der Gasse des Rückwärtsgangs informiert, dass er im Begriff ist, den Rückwärtsgang einzulegen. Die Orientierung des Bedieners über die Stellung des Schalthebels zu dem Getriebe ist damit erleichtert. Das mit der ansteigenden Wählkraft abgegebene Signal an den Bediener wird insbesondere genutzt, um den Bediener vor unbeabsichtigten Wechseln aus einer Gasse für die Vorwärtsgänge in die Gasse für den Rückwärtsgang zu warnen. Diese sogenannte Schlagsperre wirkt bei unbeabsichtigtem Wählen, aber auch bei beabsichtigtem Wählen der Gasse des Rückwärtsgangs. Die Wählkraft ist in dem Moment wesentlich höher als die Kräfte, die beim Wählen der Gassen der Vorwärtsgänge am Schaltknauf auftreten. Nach dem Überwinden der erhöhten Wählkraft sinkt die Betätigungskraft wieder auf ein normales Niveau. Dieser Verlauf der Wählkraft beim Verschwenken des Schwenkhebels in der Wählgasse ist bedingt durch die Gestaltung der Kontur der Rampe und die Kraft, mit der die Ablaufrolle unter Einwirkung des Federelements gegen die Rampe vorgespannt ist.

In der DE 102 04 230 A1 ist gleichfalls eine gattungbildende Schalteinrichtung der eingangs genannten Art beschrieben. Bei dieser ist die Kontur der Rampe allerdings nicht durch mehrere Konturelemente gemäß der vorgenannten Wählschwingen gebildet, sondern durch ein Konturelement, wobei ein auf gleicher Art und Weise wirkendes Konturelementpaar vorgesehen ist. Das Konturelementpaar ist in einem bügelförmigen Blech verwirklicht, wobei die beiden parallelen Schenkel des Blechs die jeweiligen Rampen aufweisen, und auf der jeweiligen Rampe die mittels des Federelements vorgespannte Ablaufrolle abläuft.

Den vorbeschriebenen Schalteinrichtungen ist gemeinsam, dass das Anwählen von Schaltgassen nur in Abhängigkeit von der Kontur der Rampe variiert werden kann.

Aufgabe der vorliegenden Erfindung ist es, eine Schalteinrichtung der eingangs genannten Art so weiter zu bilden, dass das Anwählen von Schaltgassen unabhängig von der Kontur der Rampe variiert werden kann.

Gelöst wird die Aufgabe mit einer Schalteinrichtung gem. den Merkmalen das Anspruchs 1.

Hierbei ist der Anschlag elektromagnetisch mittels eines Hubmagneten in die Verfahrstellung verfahrbar, wobei die einer Rückstellung des Anschlags in die Ausgangsstellung entgegenwirkende Kraft des Hubmagneten in der Verfahrstellung des Anschlags maximal bzw. am größten ist. Zum Einleiten der Rückstellung des Anschlags muss der Bediener demzufolge eine relativ hohe Kraft in den Anschlag einleiten; mit zunehmendem Verfahrweg des Anschlags in Richtung dessen Ausgangsstellung reduziert sich die Rückstellkraft, die vom Bediener aufzubringen ist.

Der Anschlag stellt somit beim Wählen der Schaltgassen ein Hindernis dar, wobei dieses Hindernis den unterschiedlichsten Modifikationen zugänglich ist und überdies auf unterschiedlichste Art und Weise ansteuerbar sein kann. So ist es grundsätzlich möglich, den Anschlag als verfahrbaren starren Anschlag auszubilden, der somit in seiner Verfahrstellung die von ihm überfahrene Schaltgasse blockiert, bis er wieder in seine Ausgangsstellung zurückverfahren wird. In diesem Fall lässt sich der eine Gang oder die beiden Gänge dieser gesperrten Schaltgasse nicht benutzen. Es handelt sich insbesondere um die Schaltgasse des Rückwärtsgangs oder die des Rückwärtsgangs und des ersten Vorwärtsgangs. Insbesondere dann, wenn das Fahrzeug eine gewisse, relativ geringe Geschwindigkeit überschritten hat, beispielsweise eine Geschwindigkeit von mindestens 5 km/h besitzt, wird der Anschlag in die Verfahrstellung bewegt, so dass nicht mehr aus einem höheren Gang in den Rückwärtsgang bzw. den Rückwärtsgang oder den ersten Vorwärtsgang geschaltet werden kann. Dies ist erst dann möglich, wenn die Geschwindigkeit des Fahrzeugs deutlich geringer ist, insbesondere < 5 km/h beträgt. Dann wird der Anschlag wieder in seine Ausgangsstellung außerhalb der Wählgasse verfahren, womit die Schaltgasse für den Rückwärtsgang bzw. den Rückwärtsgang und den ersten Vorwärtsgang zugänglich ist.

Andererseits, und dies wird als vorteilhaft angesehen, ist der Anschlag so gestaltet, dass er entgegen einer Widerstandskraft in Richtung der Ausgangsstellung des Anschlags beweglich ist. In diesem Fall kann zwar die Schaltgasse, in deren Bereich der Anschlag bewegt ist, nach wie vor angewählt werden, aber nur durch Aufbringen einer erhöhten Wählkraft, die über die Wählkraft aufgrund der Kontur der Rampe im Bereich dieser Wählgasse aufzubringen ist. Es ergibt sich somit eine unterschiedliche einzuleitende Wählkraft beim Wählen der interessierenden Schaltgasse einerseits in Abhängigkeit von der Kontur der Rampe, andererseits in Abhängigkeit von der Kontur der Rampe und der überlagerten Widerstandskraft, die auf den Anschlag wirkt. Auch in diesem Fall wird der Anschlag bevorzugt in Abhängigkeit von einer Geschwindigkeit des Fahrzeuges verfahren, entsprechend dem vorgenannten Geschwindigkeitsbereich.

Die Kontur der Rampe kann auf unterschiedliche Art und Weise gebildet sein. Beispielsweise ist die Kontur der Rampe durch ein Konturelement gebildet oder aber durch mehrere Konturelemente.

Die erfindungsgemäße Schalteinrichtung findet insbesondere bei einem mehrgängigen Zahnräderwechselgetriebe Verwendung, bei dem einer Schaltgasse der Rückwärtsgang und der erste Vorwärtsgang zugeordnet ist. Der Anschlag ragt somit in der Verfahrstellung in die Wählgasse im Bereich der Schaltgasse für den Rückwärtsgang und den ersten Vorwärtsgang.

Die Schalteinrichtung weist insbesondere vier Schaltgassen auf. Es handelt sich insbesondere um ein Getriebe mit einem Rückwärtsgang und sieben Vorwärtsgängen.

Die Gestaltung des Aktuators kann auf unterschiedliche Art und Weise erfolgen, sofern der erfindungsgemäße Zweck erreicht wird. So kann der Aktuator beispielsweise unmittelbar mit einem Schalthebel im Sinne der Offenbarung der DE 102 04 230 A1 zusammenwirken und, aufgrund der Schwenkbarkeit des Schalthebels um zwei senkrecht zueinander angeordnete Achsen, die bei der Schalteinrichtung erforderliche axiale Bewegung und Schwenkbewegung erzielen. Es ist auch möglich, die Funktion des Aktuators in das Getriebegehäuse zu integrieren.

Weitere Merkmale der Erfindung ergeben sich aus den Unteransprüchen.

In der Zeichnung ist das Funktionsprinzip und ein bevorzugtes Ausführungsbeispiel der Erfindung veranschaulicht, ohne hierauf beschränkt zu sein. Es stellt dar:
- Fig. 1: in schematischer Darstellung das Schaltschema der Schalteinrichtung mit einer Wählgasse und vier Schaltgassen,
- Fig. 2: eine Prinzipskizze zur Veranschaulichung der Wählkrafterzeugung bei der Schalteinrichtung mittels einer konturierten Rampe sowie unter Berücksichtigung des erfindungsgemäßen Anschlags,
- Fig. 3: für ein konkretes Ausführungsbeispiel der erfindungsgemäßen Schalteinrichtung eine Ansicht einer Bestandteil der Schalteinrichtung bildenden Kontrolleinheit, gezeigt für die in Fig. 1 veranschaulichte Neutralstellung "N",
- Fig. 4.: die in Fig. 3 gezeigte Einheit in einer Wählstellung des Aktuators zum Schalten des in der zweiten Schaltgasse befindlichen zweiten und dritten Vorwärtsgangs, bei in Verfahrsteliung befindlichem Anschlag,
- Fig. 5: die Einrichtung in einer Wählstellung des Aktuators zum Schalten des in der ersten Schaltgasse befindlichen Rückwärtsgangs und ersten Vorwärtsgangs, bei entgegen der Widerstandskraft in die Ausgangsstellung zurück bewegtem Anschlag.

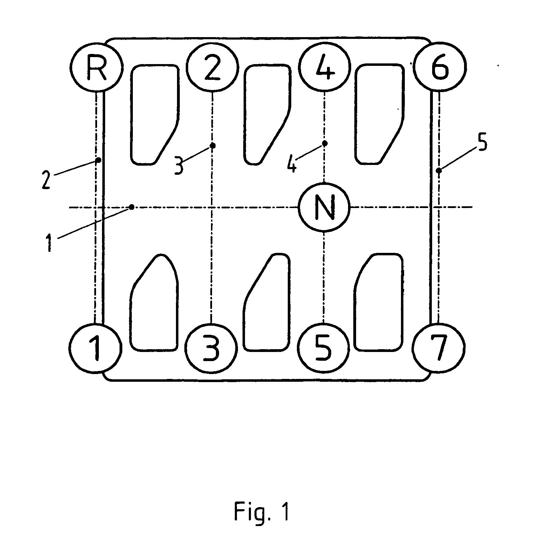

Fig. 1 zeigt das Schaltschema des bei der konkreten Ausführungsform vorgesehenen Zahnräderwechselgetriebes, das einen Rückwärtsgang und sieben Vorwärtsgänge aufweist. Nachfolgend ist der Einfachheit halber der jeweilige Vorwärtsgang kurz mit Gang bezeichnet. Das Schaltschema verdeutlicht, dass eine Wählgasse 1 und vier Schaltgassen 2 bis 5 vorgesehen sind. In der Schaltgasse 2 lassen sich der Rückwärtsgang und der erste Gang schalten, in der Schaltgasse 3 der zweite und der dritte Gang, in der Schaltgasse 4 der vierte und der fünfte Gang sowie in der Schaltgasse 5 der sechste und der siebte Gang. Die Neutralstellung "N" befindet sich in der Wählgasse 1 im Kreuzungspunkt mit der Schaltgasse 4.

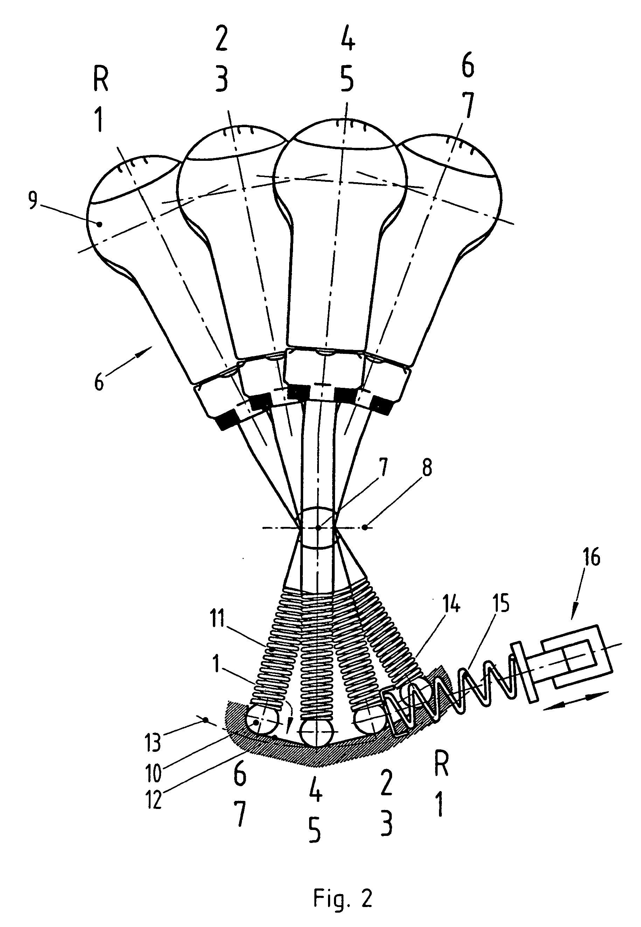

Fig. 2 veranschaulicht für dieses Schaltschema die Verhältnisse im Bereich der Wählgasse 1 für die den vier Schaltgassen 2 bis 5 zugeordneten Positionen eines Schalthebels 6. Der Schalthebel 6 ist um die Achse 7, die senkrecht zur Blattebene gemäß Fig. 2 verläuft, und um die senkrecht hierzu in der Blattebene verlaufende Achse 8 schwenkbar. Im Bereich seines dem Schaltknauf 9 abgewandten Endes nimmt der Schalthebel 6 eine Ablaufrolle 10 auf, die in Längsrichtung des Schalthebels 6 entgegen der Kraft eines Federelementes 11, das als Druckfeder ausgebildet ist, verschieblich ist. Mittels dieses Federelementes 11 wird die Ablaufrolle 10 gegen eine Rampe 12 in der Wählgasse 1 gedrückt. Diese Rampe weist eine von einer Kreisbogenform abweichende Kontur auf. In der Fig. 2 ist, bezogen auf die Neutralstellung "N", somit der Stellung der Ablaufrolle 10 in der dritten Schaltgasse 4, mit strichpunktierter Linie die Form des Kreisbogens 13 mit dargestellt, so dass die hiervon abweichende Gestaltung der Kontur der Rampe 12 besonders deutlich wird. Der Mittelpunkt des Kreisbogens 13 ist die Achse 7.

Die Rampe 12 weist zwischen der Schaltgasse 4 und der Schaltgasse 5 einen ersten Rampenabschnitt auf, der so positioniert ist, dass die Wählkraft beim Überführen des Schalthebels 6 von der Schaltgasse 4 in die Schaltgasse 5 stetig steigt und die Ablaufrolle 10 bei Erreichen der Schaltgasse 5 aufgrund der Kontur der Rampe 12 blockiert ist. Zwischen der Schaltgasse 4 und der Schaltgasse 3 weist die Rampe 12 einen zweiten Rampenabschnitt auf, wobei dieser Rampenabschnitt so gestaltet ist, dass die Wählkraft beim Überführen des Schalthebels 6 von der Schaltgasse 4 in die Schaltgasse 3 zunimmt. Beim Überführen des Schalthebels 6 von der Schaltgasse 3 in die Schaltgasse 2 nimmt die Wählkraft nochmals zu, wobei die Schwenkbewegung des Schalthebels 6 bei Erreichen der Schaltgasse 2 aufgrund der Gestaltung der Kontur der Rampe 12 begrenzt ist.

Im Bereich der Rampe 12 ist ein verfahrbarer Anschlag angeordnet, der in der in Fig. 2 nicht dargestellten Ausgangsstellung außerhalb der Wählgasse 1 (somit rechts neben der in der Schaltgasse 2 - Rückwärtsgang und erster Gang - angeordneten Ablaufrolle 10) angeordnet ist und in einer Verfahrstellung, die in Fig. 2 gezeigt ist, in die Wählgasse 1 im Bereich der Schaltgasse 2 ragt. In der Verfahrstellung kann somit der Schalthebel 6 - ohne Einwirkung des Anschlags 14 - nur zwischen den Schaltgassen 3 und 5 verschwenkt werden, somit nur die Gänge 2 bis 7 schalten. Der Anschlag ist auf seiner der Schaltgasse 2 zugewandten Seite mittels eines Federelements 15, das als Druckfeder ausgebildet ist, beaufschlagt und mittels einer Einrichtung 16, die mechanisch, elektrisch und/oder magnetisch wirksam ist, verfahrbar, zwischen der gezeigten Verfahrstellung und der Ausgangsstellung.

Aus dem insoweit Beschriebenen ergibt sich die grundsätzliche Ausgestaltung der Schalteinrichtung als variable Schlagsperre. Diese wird beispielsweise so angesteuert, dass dann, wenn das Fahrzeug steht, sich der Anschlag 14 in seiner Ausgangsstellung befindet. Demzufolge kann der Schalthebel 9, ausgehend von der Neutralstellung "N", ausschließlich unter Einwirkung der Rampe 12 auf die Ablaufrolle 10 und das Federelement 11, bis zur Schaltgasse 2 entlang der Wählgasse 1 bewegt werden, womit der Rückwärtsgang oder der erste Gang geschaltet werden können. Beim Fahren, beispielsweise bei einer Geschwindigkeit von mindestens 5 km/h oder beim Hochschalten, somit beim Verlassen der Schaltgasse 2, wird die Einrichtung 16 aktiviert, so dass der Anschlag 14 bis zur Schaltgasse 3 für den zweiten und dritten Gang vorrückt. Dies ist besonders von Vorteil bei dem veranschaulichten Getriebe mit den sieben Vorwärtsgängen und dem einen Rückwärtsgang. Dieses Getriebe ermöglicht bei in Verfahrstellung befindlichem Anschlag ein komfortables Schalten, wie bei einem Getriebe mit drei Schaltgassen. Es ist kein Verschalten beim Rückschalten vom vierten in den dritten Gang durch versehentliches Schalten in den ersten Gang möglich, weil der Anschlag 14 nur mit einer wesentlich höheren Kraft aufgrund des Federelements 15 überwunden werden kann. Während bei herkömmlichen Getrieben durch die Gestaltung der Rampe 12 eine deutliche Krafterhöhung beim Überführen des Schalthebels in die Schaltgasse des Rückwärtsgangs und/oder ersten Gangs erforderlich ist, ist dies bei der beschriebenen Ausgestaltung mit dem verfahrbaren Anschlag 14 nicht notwendig, weil der federbelastete Anschlag 14 eine Krafterhöhung beim genannten Wählvorgang bewirkt, allerdings nur dann, wenn der Anschlag sich in seiner Verfahrstellung befindet.

Der Anschlag 14 wird beispielsweise dann in seine Ausgangsstellung zurück verfahren, wenn das Fahrzeug sich mit einer Geschwindigkeit bewegt, die < 5 km/h ist. Dann kann der Bediener die Schaltgasse für den Rückwärtsgang und den ersten Gang anwählen, wobei nur die durch die Rampe 12 eingeleiteten Kräfte auf den Schalthebel 6 wirken.

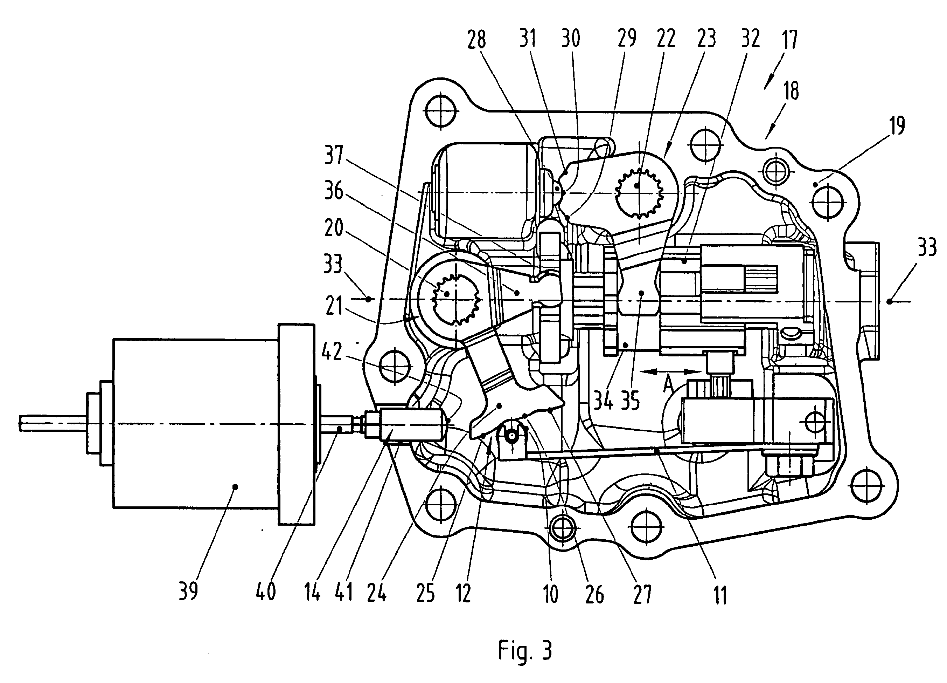

Die Figuren 3 bis 5 zeigen den konkreten Aufbau der Schalteinrichtung, die im vorbeschriebenen Sinne wirksam ist. Zur grundsätzlichen Beschreibung dieses Ausführungsbeispiels der Schalteinrichtung wird zunächst die auf die Darstellung der Fig. 3 Bezug genommen.

In dieser Fig. 3 sind Bauteile, die in ihrer Funktion denen gemäß der Fig. 2 entsprechen, mit denselben Bezugsziffern bezeichnet.

Veranschaulicht ist eine Kontrolleinheit 17, die Bestandteil der Schalteinrichtung bildet. Diese weist ein Gehäuse 18 mit Unterteil und Deckel 19 auf, wobei nur der Deckel 19 gezeigt ist. Bei manuellem Betätigen des Schalthebels 6 wird bei dessen Bewegung entlang der Wählgasse 1 über einen nicht dargestellten Seilzug eine Welle 20 verschwenkt, die drehfest einen Vorwahlsteller 21 aufnimmt. Bei manuellem Betätigen des Schalthebels 6 wird bei dessen Bewegung entlang der jeweiligen Schaltgasse 2, 3, 4 bzw. 5 über einen weiteren, nicht dargestellten Seilzug eine Welle 22 verschwenkt, die drehfest einen Schaltsteller 23 aufnimmt. Das als Blattfeder ausgebildete, im Deckel 19 gelagerte Federelement 11 nimmt im Bereich seines lagerfernen Endes die Ablaufrolle 10 auf, die unter Einwirkung des Federelements 11 die Rampe 12 eines mit dem Vorwahlsteller 21 verbundenen Ansatzes 24 kontaktiert, wobei die Rampe 12 die drei Kurvenabschnitte 25, 26, 27 im Sinne der Beschreibung zur Fig. 2 aufweist, so dass in Abhängigkeit von der Schwenkbewegung des Vorwahlstellers 21 unterschiedliche Federkräfte über das Federelement 11 in den Vorwahlsteller eingeleitet werden. Es sind somit unterschiedliche Kräfte zum Überführen des Schalthebels 6 bzw. eines nachfolgend beschriebenen Aktuators in der Wählgasse 1 zum Erreichen der einzelnen Schaltgassen 2 bis 5 erforderlich und es ergibt sich insbesondere hierdurch die in Fig. 1 veranschaulichte Neutralstellung "N".

Der Schaltsteller 23 ist auf seiner einem Kugeldruckstück 28 zugewandten Stirnfläche mit drei Stirnflächenbereichen 29, 30 und 31 versehen, wobei der Schaltsteller 23 in seiner den Gangschaltstellungen "R", "2", "4" und "6" entsprechenden Schaltstellung mit seinem Stirnflächenbereich 29 das Kugeldruckstück 28 kontaktiert, in der Stellung, der der Position der Wählgasse 1 entspricht, somit der Stellung "N", der Stirnflächenbereich 30 das Kugeldruckstück 28 kontaktiert und in der der Schaltstellung "1", "3", "5" und "7" der Stirnflächenbereich 31 das Kugeldruckstück 28 kontaktiert und hierbei jeweils das Kugeldruckstück 28 mit dem Stirnflächenbereich 29 bzw. 30 bzw. 31 rastiert.

Im Gehäuse 18 ist der Aktuator 32 in Richtung des Doppelpfeiles A axial verschiebbar gelagert und um seine Achse 33 schwenkbar. Der Aktuator 32 weist eine Tangentialnut 34 auf, in die ein Ansatz 35 des Schaltstellers 23 eingreift. Eine Schwenkbewegung des Schaltstellers mittels der Welle 22 führt somit zu einer Axialbewegung des Aktuators 32 in drei unterschiedlichen Positionen, die einerseits den drei Rastierstellungen zwischen dem Schaltsteller 23 und dem Kugeldruckstück 28 und anderseits den beiden Schaltstellungen und der zwischen diesen angeordneten Neutralstellung der jeweiligen Schaltgasse 2 bzw. 3 bzw. 4 bzw. 5 entsprechen.

Der Vorwahlsteller 21 weist einen Ansatz 36 auf, der in eine Radialnut 37 des Aktuators 32 eingreift. Der Aktuator 32 ist zusätzlich in einer Schaltführung 38 axial geführt.

Der Aktuator 32 ist auf seiner in der Fig. 3 nicht einsehbaren Seite radial außen mit einem Schaltfinger versehen, der, je nach Position des Aktuators 32, in Nuten von vier Schaltstangen einführbar ist - jeweils in die Nut einer Schaltstange - wobei jede Schaltstange die Schaltbewegung einer der Schaltgassen 2 bis 5 ausführt. Die Wahl der jeweiligen Schaltgasse erfolgt durch das Bewegen des Schaltfingers entlang der Wahlgasse 1.

Außerhalb des Gehäuses 18 ist ein Hubmagnet 39 angeordnet, der in nicht gezeigter Art und Weise mit dem Gehäuse 18 verbunden ist. Das bewegliche Stellglied des Hubmagneten 39 ist mit der Bezugsziffer 40 bezeichnet. Es nimmt im Bereich seines vorderen Endes den Anschlag 14 auf, der eine Öffnung 41 im Gehäuse 18 durchsetzt. Im Bereich seines vorderen Endes weist der Anschlag 14 eine drehbare Rolle 42 auf, die in Kontakt mit dem Ansatz 24 des Vorwahlstellers 21 bringbar ist.

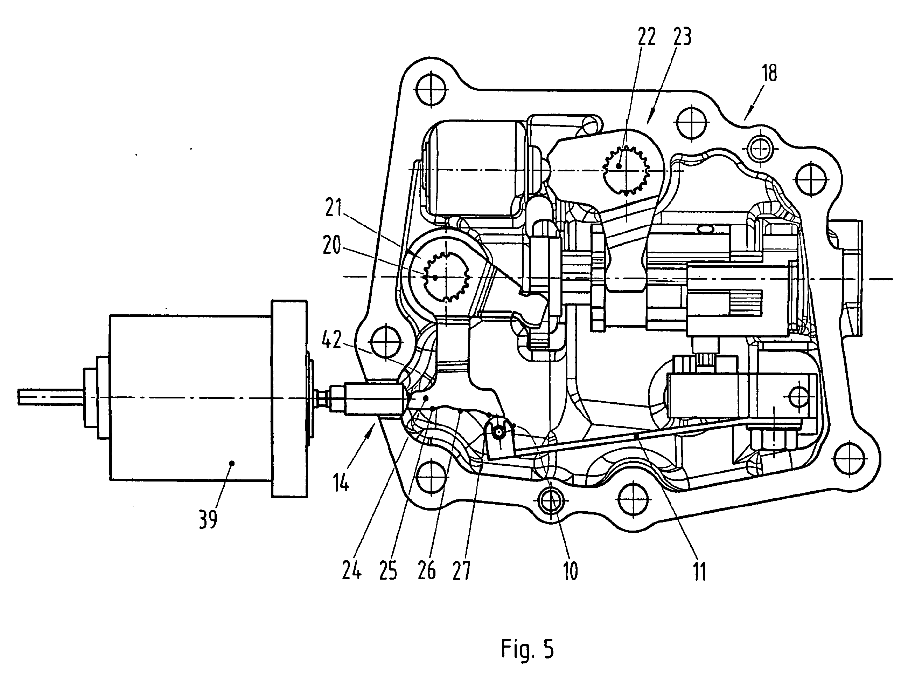

Fig. 3 zeigt die Schalteinrichtung in der in der Fig. 1 veranschaulichten Neutralstellung "N" bzw. in der in Fig. 5 gezeigten Zentralstellung, in der sich die Ablaufrolle 10 in der Wählgasse 1 im Bereich der Schaltgasse 4 für den vierten und fünften Gang befindet, somit im Bereich des Knicks zwischen dem Kurvenabschnitt 25 und dem Kurvenabschnitt 26.Hierbei befindet sich, gemäß dem konkreten Anwendungszweck, das Stellglied 40 des Hubmagneten 29 in seiner ausgefahrenen Position, so dass der Anschlag 14 sich in der Verfahrstellung befindet, in der er in die Wählgasse 1 im Bereich der Schaltgasse 2 ragt.

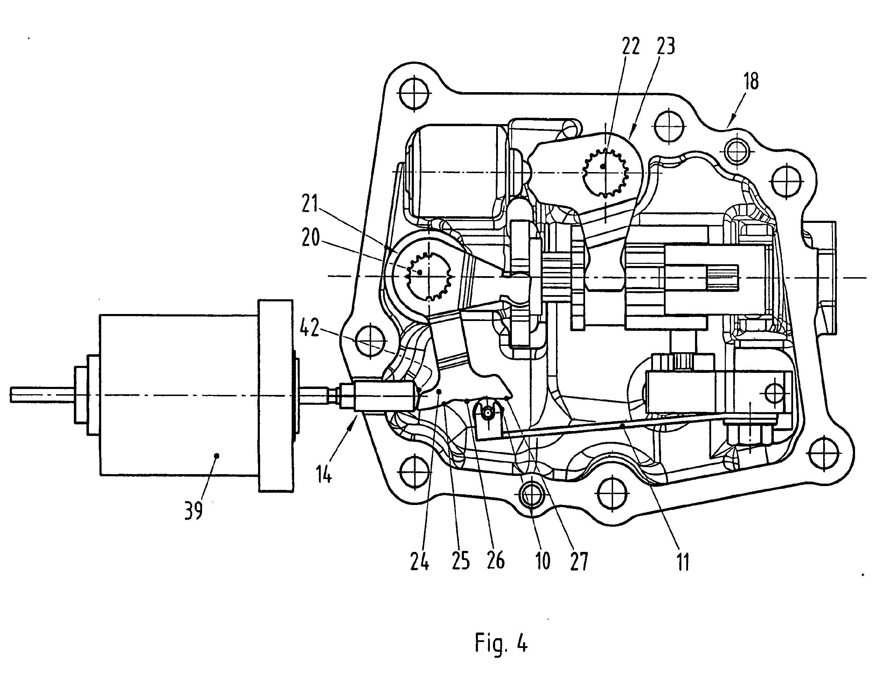

Fig. 4 veranschaulicht die Situation, in der sich der Vorwahlsteller 21 in einer Position befindet, in der die Gänge der zweiten Schaltgasse 3, somit der zweite und der dritte Gang, geschaltet werden können. In dieser Stellung ist der Ansatz 24 des Vorwahlstellers 21 in geringem Abstand zur Rolle 42 des Anschlags 14 angeordnet.

Ein Anwählen der Gänge der ersten Schaltgasse 2 ist nur dann möglich, wenn mittels des Ansatzes 24 der Anschlag 14 eingeschoben wird. Die eingeschobene Stellung - Ausgangsstellung - des Anschlages 14 ist in Fig. 5 veranschaulicht. Die Charakteristik des Hubmagneten 39 ist so ausgelegt, dass ausgehend von der Stellung gemäß Fig. 4 eine relativ hohe Kraft zum Bewegen des Stellgliedes 40 in Richtung der Ausgangsstellung des Anschlags 14 erforderlich ist und diese Kraft zum Verstellen des Anschlags abnimmt, konkret anfänglich stark abnimmt und dann weniger stark abnimmt. Der Bediener muss somit dann, wenn er die Schlagsperre überwinden will, anfänglich eine recht hohe Kraft aufbringen, die anschließend geringer wird. Unabhängig von dieser grundsätzlichen Wirkungsweise bleibt der Hubmagnet 39 bis zu einer Geschwindigkeit des Fahrzeuges von z.B. < 5 km/h unbestromt, so dass sich der Anschlag in seiner Ausgangsstellung befindet. Wird diese Geschwindigkeit überschritten, wird der Magnet bestromt und demzufolge der Anschlag in seine Verfahrstellung überführt. Damit ist ein komfortables Schalten wie bei Getrieben mit drei Schaltgassen möglich. Es ist kein Verschalten beim Rückschalten vom vierten Gang auf den dritten Gang durch versehentliches Schalten in den ersten Gang möglich, da hierfür eine höhere Schlagsperrenkraft zu überwinden wäre. Die Schlagsperrenkraft ist über die Magnetkraft einstellbar.

### Bezugszeichenliste

- 1: Wählgasse
- 2: Schaltgasse
- 3: Schaltgasse
- 4: Schaltgasse
- 5: Schaltgasse
- 6: Schalthebel
- 7: Achse
- 8: Achse
- 9: Schaltknauf
- 10: Ablaufrolle
- 11: Federelement
- 12: Rampe
- 13: Kreisbogen
- 14: Anschlag
- 15: Federelement
- 16: Einrichtung
- 17: Kontrolleinheit
- 18: Gehäuse
- 19: Deckel
- 20: Welle
- 21: Vorwahlsteller
- 22: Welle
- 23: Schaltsteller
- 24: Ansatz
- 25: Kurvenabschnitt
- 26: Kurvenabschnitt
- 27: Kurvenabschnitt
- 28: Kugeldruckstück
- 29: Stirnflächenbereich
- 30: Stirnflächenbereich
- 31: Stirnflächenbereich
- 32: Aktuator
- 33: Achse
- 34: Tangentialnut
- 35: Ansatz
- 36: Ansatz
- 37: Radialnut
- 38: Schaltführung
- 39: Hubmagnet
- 40: Stellglied
- 41: Öffnung
- 42: Rolle

## Patentansprüche

1. Schalteinrichtung mit Federlement (11) zur Wählkrafterzeugung für ein mehrgängiges Zahnräderwechselgetriebe eines Kraftfahrzeuges, mit einem in einem Gehäuse (18) gelagerten, schwenkbaren und axial verschiebbaren Wähl-und Schaltaktuator (6, 32), wobei durch Schwenken des Aktuators über eine Wählgasse (1) Schaltgassen (2, 3, 4, 5) der Schalteinrichtung anwählbar sind und durch anschließendes axiales Verschieben des Aktuators Gangstufen der Schalteinrichtung schaltbar sind, wobei die Wählkraft bei Schwenkbewegungen des Aktuators durch eine mittels des Federelements gegen eine Rampe (12) vorgespannten Ablaufrolle (10) aufgrund der Kontur (25, 26, 27) der Rampe in Laufrichtung der Ablaufrolle steuerbar ist, **dadurch gekennzeichnet, dass** im Bereich der Rampe (12) ein verfahrbarer Anschlag (14) angeordnet ist, wobei der Anschlag in einer Ausgangsstellung außerhalb der Wählgasse (1) angeordnet und in einer Verfahrstellung in die Wählgasse (1) im Bereich einer Schaltgasse (2) ragt, und der Anschlag (14) elektromagnetisch mittels eines Hubmagneten (39) in die Verfahrstellung verfahrbar ist, wobei die Charakteristik des Hubmagneten (39) so ausgelegt ist, dass ausgehend von der besagten Verfahrstellung eine Kraft zum Bewegen eines Stellgliedes (40) des Hubmagneten (39) in Richtung der Ausgangsstellung des Anschlags (14) erforderlich ist und diese Kraft zum Verstellen des Anschlags (14) in besagten Richtung abnimmt, so dass die einer Rückstellung des Anschlags in die Ausgangsstellung entgegenwirkende Kraft des Hubmagneten in der Verfahrstellung des Anschlags (14) am gröβten ist.

2. Einrichtung nach Anspruch 1, **dadurch gekennzeichnet, dass** der Anschlag (14) in der Verfahrstellung in die Wählgasse (1) im Bereich der Schaltgasse (2) für den Rückwärtsgangs und den ersten Vorwärtsgang ragt.

3. Einrichtung nach Anspruch 1 oder 2, **dadurch gekennzeichnet, dass** sie vier Schaltgassen (2, 3, 4, 5) aufweist.

4. Einrichtung nach einem der Ansprüche 1 bis 3, **dadurch gekennzeichnet, dass** das Getriebe einen Rückwärtsgang und sieben Vorwärtsgänge aufweist.

5. Einrichtung nach einem der Ansprüche 1 bis 4, **dadurch gekennzeichnet, dass** der Anschlag (14) bei stehendem Kraftfahrzeug oder bei geringer Fahrzeuggeschwindigkeit, insbesondere einer Fahrzeuggeschwindigkeit < 5 km/h, in der Ausgangsstellung angeordnet ist.

6. Einrichtung nach einem der Ansprüche 1 bis 5, **dadurch gekennzeichnet, dass** der Anschlag bei Überschreiten einer geringen Fahrzeuggeschwindigkeit, insbesondere einer Fahrzeuggeschwindigkeit ≤ 5 km/h, in der Verfahrstellung angeordnet ist.

7. Einrichtung nach einem der Ansprüche 1 bis 6, **dadurch gekennzeichnet, dass** die Kontur der Rampe durch ein Konturelement (24) oder durch mehrere Konturelemente gebildet ist.

## Claims

1. Selector device having a spring element (11) for generating a selecting force for a multiple-ratio change-speed gearbox, having a pivotable and axially displaceable selecting and shifting actuator (6, 32) which is mounted in a housing (18), it being possible for shift gates (2, 3, 4, 5) of the selector device to be selected by pivoting of the actuator via a selector gate (1) and for gear stages of the selector device to be selected by subsequent axial displacement of the actuator, it being possible for the selecting force to be controlled during pivoting movements of the actuator by a running roller (10) which is prestressed against a ramp (12) by means of the spring element, on the basis of the contour (25, 26, 27) of the ramp in the running direction of the running roller, **characterized in that** a movable stop (14) is arranged in the region of the ramp (12), the stop being arranged outside the selector gate (1) in a starting position and protruding into the selector gate (1) in the region of a shift gate (2) in a moved position, and it being possible for the stop (14) to be moved electromagnetically into the moved position by means of a lifting magnet (39), the characteristic of the lifting magnet (39) being designed such that, starting from the said moved position, a force is required to move an actuating element (40) of the lifting magnet (39) in the direction of the starting position of the stop (14) and this force for adjusting the stop decreases in the said direction, with the result that the force of the lifting magnet which counteracts restoring of the stop into the starting position is greatest in the moved position of the stop (14).

2. Device according to Claim 1, **characterized in that**, in the moved position, the stop (14) protrudes into the selector gate (1) in the region of the shift gate (2) for the reverse gear and the first forward gear.

3. Device according to Claim 1 or 2, **characterized in that** it has four shift gates (2, 3, 4, 5).

4. Device according to one of Claims 1 to 3, **characterized in that** the gearbox has one reverse gear and seven forward gears.

5. Device according to one of Claims 1 to 4, **characterized in that** the stop (14) is arranged in the starting position when the motor vehicle is at a standstill or in the case of a low vehicle speed, in particular a vehicle speed of < 5 km/h.

6. Device according to one of Claims 1 to 5, **characterized in that** the stop is arranged in the moved position if a low vehicle speed is exceeded, in particular a vehicle speed of ≤ 5 km/h.

7. Device according to one of Claims 1 to 6, **characterized in that** the contour of the ramp is formed by a contour element (24) or by a plurality of contour elements.

## Revendications

1. Dispositif de changement de vitesses avec élément ressort (11) de rappel d'organes de sélection pour une transmission multivitesses d'un véhicule automobile, avec un actionneur de sélection et de changement de vitesses (6, 32) disposé dans un carter (18), pouvant pivoter et être déplacé dans le plan axial, les couloirs de changement de vitesses (2, 3, 4, 5) du dispositif de changement de vitesses pouvant être sélectionnés par pivotement de l'actionneur par-delà un couloir de sélection (1) et des rapports du dispositif de changement de vitesses pouvant être commutés par un coulissement axial correspondant de l'actionneur, la force de sélection pouvant être commandée en présence de mouvements de pivotement de l'actionneur par le biais d'un rouleau descendant (10) précontraint contre une rampe (12) à l'aide de l'élément ressort sur la base du contour (25, 26, 27) de la rampe dans la direction de descente du rouleau descendant, **caractérisé en ce qu'**une butée (14) mobile est disposée dans la région de la rampe (12), la butée étant disposée à l'extérieur du couloir de sélection (1) dans une position de départ et ressortant dans le couloir de sélection (1) dans la région d'un couloir de changement de vitesses (2) dans la position déplacée et la butée (14) pouvant être déplacée de façon électromagnétique dans la position déplacée à l'aide d'un aimant de soulèvement (39), la caractéristique de l'aimant de soulèvement (39) étant telle que l'application d'une force est nécessaire, en partant de ladite position déplacée, pour déplacer un élément de déplacement (40) de l'aimant de soulèvement (39) en direction de la position de départ de la butée (14) et que cette force décroît dans ladite direction pour déplacer la butée (14), de sorte que la force de l'aimant de soulèvement s'opposant au rappel de la butée dans la position de départ est la plus importante dans la position déplacée de la butée (14).

2. Dispositif selon la revendication 1, **caractérisé en ce que** dans la position déplacée, la butée (14) ressort dans le couloir de sélection (1), dans la région du couloir de changement de vitesses (2), pour la marche arrière et la première vitesse avant.

3. Dispositif selon la revendication 1 ou 2, **caractérisé en ce qu'**il comporte quatre couloirs de changement de vitesses (2, 3, 4, 5).

4. Dispositif selon l'une quelconque des revendications 1 à 3, **caractérisé en ce que** la boîte de vitesses comporte une marche arrière et sept vitesses avant.

5. Dispositif selon l'une quelconque des revendications 1 à 4, **caractérisé en ce que** la butée (14) est disposée dans la position de départ lorsque le véhicule automobile est à l'arrêt ou roule à vitesse réduite, notamment une vitesse de véhicule < 5 km/h.

6. Dispositif selon l'une quelconque des revendications 1 à 5, **caractérisé en ce que** la butée se positionne dans la position déplacée lorsque le véhicule dépasse une vitesse limitée, notamment une vitesse de véhicule ≤ 5 km/h.

7. Dispositif selon l'une quelconque des revendications 1 à 6, **caractérisé en ce que** le contour de la rampe est formé par un élément de contour (24) ou par plusieurs éléments de contour.
